# EUROPÄISCHE PATENTSCHRIFT

(11) **EP 0 799 725 B1**
(45) Veröffentlichungstag und Bekanntmachung des Hinweises auf die Patenterteilung: **12.05.2004**
(21) Anmeldenummer: 97101861.9
(22) Anmeldetag: 06.02.1997
(51) Int. Cl.: B60C 1/00, C08L 53/02, C08L 7/00

(54) **Reifenlaufflächen mit geringem Rollwiderstand und verbesserten ABS-Bremsen**
Tire treads having low rolling resistance and improved anti-lock braking
Bandes de roulement de pneumatiques présentant une faible résistance au roulement et freinage amélioré avec AB

(30) Priorität: 02.04.1996 DE 19613193
(43) Veröffentlichungstag der Anmeldung: 08.10.1997
(73) Patentinhaber: Continental Aktiengesellschaft, 30165 Hannover (DE)
(72) Erfinder: Hellerman, Walter, Dr., 46282 Dorsten (DE)

(56) Entgegenhaltungen:
- EP-A- 0 328 774
- EP-A- 0 384 033
- EP-A- 0 677 548
- US-A- 4 908 401

## Beschreibung

Die vorliegende Erfindung betrifft Reifenlaufflächen auf Basis von Polydien-Kautschuken.

Die Reifenlaufflächen nehmen unter den Bauelementen des Reifens eine Sonderstellung ein. Dies liegt vor allem daran, daß die Reifenlauffläche die schmale Kontaktfläche zwischen Fahrzeug und Fahrbahn bildet. Die Eigenschaften eines Fahrzeugs beim Fahren hängen dabei besonders von der Art und Qualität der Reifenlauffläche ab. Eine optimale Reifenlauffläche muß dabei ein umfangreiches Anforderungsprofil abdecken. Neben einem hohen Abriebwiderstand und Allwettereigenschaften, d. h. auch gleichzeitig gute Wintereigenschaften, soll ein niedriger Rollwiderstand vorhanden sein. Fragen der Fahrsicherheit lassen dem Rutschwiderstand, insbesondere auf nasser Fahrbahn, eine sehr hohe Bedeutung zukommen. Dabei erhält neben dem konventionellen Blockierbremsen das in den letzten Jahren immer stärker verbesserte und weit verbreitete Antiblockiersystem (ABS) eine zunehmende Bedeutung auch für die Entwicklung von neuen Laufflächenpolymeren, die speziell auf die besonderen Gegebenheiten beim ABS-Bremsen abgestimmt sein müssen. Die EP-A 0 430 617 und EP-A 0 500 338 beschreiben Laufflächenkautschuke für verbessertes ABS-Bremsen mit den üblichen aromatischen Ölen als Weichmacher.

Zur Beurteilung des Naßrutschverhaltens im Labormaßstab hat die Raumtemperaturelastizität eine zentrale Bedeutung. Sie hat sich in der Vergangenheit bei der Bewertung des Naßrutschverhaltens beim Emulsions-SBR bewährt.

Um gute Bremswerte zu erreichen, ist es notwendig, Laufflächenpolymere mit hoher Dämpfung, d. h. mit besonders niedriger Raumtemperaturelastizität einzusetzen. Dies bedingt im allgemeinen die Herstellung von Polymeren mit hoher Glastemperatur gemäß der DE-A-37 24 871. Es handelt sich hierbei um ungesättigte, elastomere AB-Blockcopolymerisate bestehend aus
- 40 bis 80 %: eines Blockes A auf Basis Butadien (gleichmäßig verteilter Vinylgruppengehalt von 8 bis 60 %),
- 60 bis 20 %: eines Blockes B auf Basis von
- bis zu 60 % Butadien,
- 0 bis 60 % Isopren und
- 0 bis 45 % Styrol,
wobei der Vinylgehalt der Dieneinheiten 75 bis 90 % beträgt.

Ebenso kommen durch anionische Polymerisation hergestellte Copolymere aus Butadien und Styrol in Frage. Diese Copolymeren (im folgenden mit Lösungs-SBR bezeichnet) bestehen aus einem Gemisch aus Butadien und 15 bis 35 % Styrol, wobei der Vinylgehalt der Butadieneinheiten (bezogen auf Butadien) zwischen 35 und 90 % liegt.

Diese Blockcopolymerisate (Integralkautschuk) oder Lösungs-SBR weisen eine hohe Glastemperatur auf.

Am Modell eines typischen AB-Blockcopolymeren B ist dies in Tabelle 1 bei Beispiel 2 realisiert. Gegenüber der Basis (Beispiel 1) ergeben sich bei einer Elastizität von 8 beim Blockierbremsen auf Asphalt und Beton Werte von 101 und 116. Völlig überraschend ist aber der Einbruch beim ABS-Bremsen auf Asphalt auf 85 % gegenüber der Basis. Dies bedeutet, daß das im Integralkautschukmolekül eingebaute Naßrutschpotential bei schwachen Beanspruchungen, wie es das ABS-Bremsen auf Asphalt bei niedrigen Geschwindigkeiten darstellt, nicht auf der Straße umgesetzt werden kann.

Beim Bremsen auf Beton, d. h. bei schärferer Beanspruchung, wird mit einem Rating von 98 % fast das Standardniveau erreicht.

Für den Fachmann völlig überraschend wurde jetzt gefunden, daß durch Herstellung eines Blends mit Naturkautschuk (NR) mit einem derartigen Hoch-T_{G}-Kautschuk trotz Verschlechterung der Prüfdaten das ABS-Bremsen deutlich verbessert wird.

Diese Ergebnisse sind insofern überraschend, weil die Blendkomponente Naturkautschuk eine niedrige Glastemperatur besitzt und daher eigentlich bei Zugabe von Naturkautschuk eine Verschlechterung im Naßrutschen zu erwarten war.

Die Herstellung eines Blends mit 25 phr NR und 75 phr eines typischen AB-Blockcopolymeren B (Beispiel 3) erhöht die Raumtemperaturelastizität von 8 auf 20 % gegenüber Beispiel 2. Trotzdem wird das Blockierbremsen bei Nässe auf 107 % und das ABS-Bremsen von 84 auf 104 % angehoben. Ein Blend mit 50 phr NR (Beispiel 4) ergibt bei weiterer Verschlechterung der Laborwerte trotzdem ein ABS-Bremsen von 102 % gegenüber der Basis. Gleichzeitig wird der Rollwiderstand auf 102 % gegenüber der Basis angehoben. Die gleichzeitige Verringerung der Shore-A-Härte bei 0 °C bei den Beispielen 3 und 4 führt zu einer Verbesserung der Wintereigenschaften gegenüber Beispiel 2.

Mit speziellen Hoch-T_{G}-Terpolymeren lassen sich durch Blends mit Naturkautschuk noch bessere Naßrutscheigenschaften sowohl beim ABS-Bremsen als auch beim Blockierbremsen erreichen. So ergibt bei Beispiel 5 das Terpolymer C mit einem Blendverhältnis von 40 phr C : 60 phr Naturkautschuk ein ABS-Bremsen von 113 % gegenüber der Basis. Mit 60 phr Terpolymer C und 40 phr Naturkautschuk wird eine Verbesserung von 22 % beim ABS-Bremsen gegenüber der Basis gefunden (Beispiel 6).

Es werden folgende AB- und ABC-Blockcopolymere auf Basis von Butadien, Isopren und Styrol oder Butadien und Styrol eingesetzt:

AB-Blockcopolymerisate aus
- 40 bis 80 %: eines Blocks A auf Basis Butadien (gleichmäßig verteilter Vinylgruppengehalt von 8 bis 60 %),
- 60 bis 20 %: eines Blocks B auf Basis von
- bis zu 60 % Butadien,
- 0 bis 60 % Isopren und
- 0 bis 45 % Styrol,
wobei der Vinylgehalt der Dieneinheiten 75 bis 90 % beträgt. Der Butadiengehalt des Blocks B beträgt vorzugsweise 5 bis 60 %.

Vorzugsweise enthält das AB-Blockcopolymerisat
- 50 bis 75 % Butadien-1,3,
- 5 bis 35 % Isopren und
- 5 bis 25 % Styrol.

ABC-Blockcopolymerisate aus
- 40 bis 75 %: eines Blocks A aus Butadien- und Styrol- und/oder Isopreneinheiten mit einem Vinyl- bzw. Isopropylengruppengehalt (V) von weniger als 15 %,
- 5 bis 25 %: eines Blocks B aus Butadien- und Styrol- und/oder Isopreneinheiten (V > 70 %) oder
- 5 bis 25 %: eines Blocks B' aus Styrol-, Isopren- und gegebenenfalls Butadieneinheiten (V < 15 %) und
- 20 bis 55 %: eines Blocks C aus Styrol-, Isopren- und gegebenenfalls Butadieneinheiten (V > 70 %)
oder
der isolierte B-Block (= Terpolymer) aus den AB-Blockcopolymerisaten auf Basis von
- bis zu 60 % Butadien,
- 0 bis 60 % Isopren und
- 0 bis 45 % Styrol,
wobei der Vinylgehalt der Dieneinheiten 50 bis 90 % beträgt. Der bevorzugte Butadiengehalt des isolierten B-Blocks beträgt 5 bis 60 %.

Beansprucht werden Reifenlaufflächen auf Basis der oben genannten Blockcopolymerisate, die eine Raumtemperaturelastizität zwischen 5 und 35 % (bei 22 °C) aufweisen, sowie üblichen Zuschlagstoffen mit deutlich verbessertem Rollwiderstand und Naßrutschverhalten beim ABS-Bremsen, dadurch gekennzeichnet, daß der Laufflächenkautschuk mit Naturkautschuk im Verhältnis 90:10 bis 40:60 verblendet wird und der Laufflöchenkautschuk 10 bis 50 phr aromatisches und/oder naphthenisches und/oder paraffinisches Öl sowie Ruß und/oder einen mineralischen Füllstoff enthält.

Das Blendverhältnis mit Naturkautschuk und diesen Polymeren kann zwischen
- 10 bis 60 phr Naturkautschuk und
- 90 bis 40 phr Polymer liegen.

Das Verfahren zur Herstellung der AB- oder ABC-Blockcopolymerisate durch anionische Polymerisation der Monomeren in einem inerten organischen Lösemittel in Gegenwart einer Li-organischen Verbindung und eines Cokatalysators ist dadurch gekennzeichnet, daß man zunächst einen Block A durch Polymerisation von Butadien in Abwesenheit eines Cokatalysators herstellt. Danach stellt man einen Block B her, indem man, gegebenenfalls in Gegenwart von Styrol, entweder Butadien und Isopren in Abwesenheit eines Cokatalysators polymerisiert oder indem man die Polymerisation von Butadien in Gegenwart eines Cokatalysators fortsetzt. Anschließend polymerisiert man ein Gemisch aus Butadien und Isopren, gegebenenfalls auch Styrol, in Gegenwart eines Cokatalysators (Block C).

Grundsätzlich besteht die Möglichkeit, zu Beginn der Polymerisation jedes Blocks die für dessen Herstellung jeweils benötigten Mengen an Monomeren dem Reaktionsgefäß zuzusetzen. Man kann aber auch bereits zu Beginn der Polymerisation des Blocks A die Gesamtmenge Butadien vorlegen und den Block B durch Zugabe des Cokatalysators oder des Isoprens beginnen. Für die Zugabe des Isoprens gelten die gleichen Überlegungen. Die Mitverwendung von Styrol als Comonomeres der Blöcke B und/oder C ist bevorzugt.

Im folgenden soll das Herstellungsverfahren der AB- oder ABC-Blockcopolymerisate detailliert beschrieben werden.

Als Reaktionsmedium wird ein inertes organisches Lösemittel verwendet. Geeignet sind insbesondere Kohlenwasserstoffe mit 6 bis 12 C-Atomen, wie Pentan, Hexan, Heptan, Oktan und Dekan sowie deren cyclische Analogen. Geeignet sind auch aromatische Lösemittel, wie z. B. Benzol, Toluol, Xylole u. a. Selbstverständlich können auch Gemische der vorstehend beschriebenen Lösemittel eingesetzt werden.

Als Katalysator werden Alkyllithiumverbindungen eingesetzt, die durch Umsetzung von Lithium mit den entsprechenden Alkylhalogeniden leicht zugänglich sind. Die Alkylreste weisen 1 bis 10 C-Atome auf. Einzelne Wasserstoffatome können durch Phenylreste substituiert sein. Folgende Alkyllithiumverbindungen sind besonders geeignet: Methyllithium, Ethyllithium, Pentyllithium; bevorzugt wird n-Butyllithium.

Zur Verbesserung des kalten Flusses wird wenigstens eine Polymerisationsstufe vorteilhafterweise in Anwesenheit geringer Mengen eines Verzweigungsmittels, wie z. B. Divinylbenzol (DVB), durchgeführt. Bezogen auf 100 Teile Monomere werden maximal 0,5 Teile DVB eingesetzt. Ein solcher Zusatz entfällt, wenn nach der Polymerisation eine Kupplung vorgesehen ist.

Art und Menge von Katalysator und Verzweigungsmittel werden im allgemeinen so ausgewählt, daß das erhaltene Blockcopolymerisat folgende Eigenschaften aufweist:

| | |
|---|---|
| Mooney-Viskosität (ML₁₋₄, 100 °C, DIN 53 523) | 35 bis 120 |
| Uneinheitlichkeit U = (Mw/Mn) - I, bestimmt durch gelpermeationschromatografische Analyse (GPC-Analyse) | 0,6 bis 3,0 |
| Defo-Elastizität (80 °C, DIN 53 514) | ≥ 20 |

Bei dem vorliegenden Verfahren wird der Block B in Anwesenheit eines Cokatalysators hergestellt.

In diesem Fall ist man daran interessiert, Polymerisat mit einem möglichst hohen Anteil von 1,2- und/oder 3,4-Struktureinheiten zu erhalten.

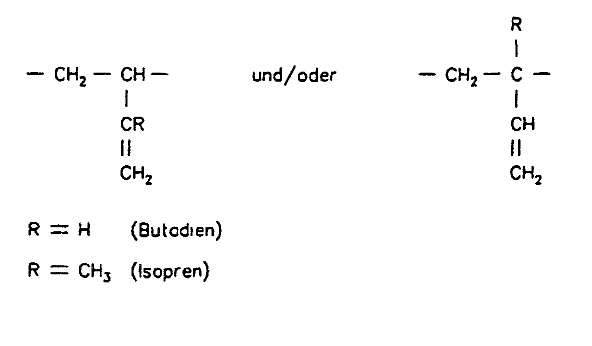

Die Auswahl der Cokatalysatoren richtet sich daher nach ihrer Fähigkeit, die Mikrostruktur zu regeln, d. h. den Verlauf der Polymerisation im Hinblick auf eine möglichst vollständige Bildung von 1,2- und/oder 3,4-Struktureinheiten zu lenken.

Der Cokatalysator wird im allgemeinen aus der Gruppe
- der Ether,
- der tertiären Amine oder
- der etherhaltigen tertiären Amine
ausgewählt. Selbstverständlich können auch Gemische verschiedener Cokatalysatoren eingesetzt werden.

Geeignete Ether umfassen insbesondere
- Dialkylether des Ethylenglykols und Diethylenglykols, deren Alkylgruppen jeweils bis zu 4 C-Atome aufweisen, wie Ethylenglykoldiethylether (DEE).

Insbesondere bei der Herstellung von verzweigten Blockcopolymeren werden Ether der allgemeinen Formel

R₁ - O - CH₂ - CH₂ - O - R₂

bevorzugt, wobei R₁ und R₂ Alkylreste mit einer unterschiedlichen Zahl von C-Atomen aus der Gruppe Methyl, Ethyl, n- und iso-Propyl sowie n-, iso-, sek.- und tert.-Butyl sind. Vorzugsweise beträgt die Summe der C-Atome der beiden Reste R₁ und R₂ 5 bis 7, insbesondere 6. Ein besonders geeigneter Ethylenglykolether ist die Verbindung mit R₁ = Ethyl und R₂ = tert.-Butyl. Die Glykolether sind beispielsweise nach dem Prinzip der Williamson-Synthese aus einem Natriumalkoholat und einem Alkylhalogenid zugänglich. Die Ether der Formel

R₁ - O - CH₂ - CH₂ - O - C(CH₃)₃

können in einfacher Weise durch Umsetzung des entsprechenden Alkohols

R₁ - O - CH₂ - CH₂ - OH

mit Isobuten in Gegenwart eines sauren Ionenaustauschers hergestellt werden.

Geeignete tertiäre Amine sind z. B. N,N,N',N'-Tetramethylethylendiamin, N,N,N',N'-Tetraethylethylendiamin und Triethylendiamin.

Geeignete etherhaltige Amine sind N-Methylmorpholin und N-Ethylmorpholin.

Der Cokatalysator wird in einem Verhältnis von 2 : 1 bis 30 : 1, insbesondere 2 : 1 bis 15 : 1, bezogen auf die Molzahl des Katalysators, eingesetzt. Bei höheren Temperaturen werden im allgemeinen größere Mengen an Cokatalysator benötigt, um die gewünschte Mikrostrukturregelung zu erzielen. Reaktionstemperaturen von 100 °C sollten nicht überschritten werden. Es ist auch möglich, bei steigender oder fallender Temperatur zu arbeiten; jedoch ist in diesem Fall dafür Sorge zu tragen, daß die Mikrostruktur nicht grundsätzlich verändert wird.

Bei der Herstellung des Blocks A hängt es von dem gewünschten Vinylgruppengehalt ab, wieviel Cokatalysator zugegen sein sollte.

Bei der Herstellung von Block B und gegebenenfalls A wird Styrol als Comonomer zugesetzt. Durch geeignete Maßnahmen ist dafür Sorge zu tragen, daß der Gehalt an Polystyrolblöcken im AB-Blockcopolymerisat 2 Massen-% nicht überschreitet. Ein Verfahren zur Bestimmung des Gehalts an Polystyrolblöcken ist in dem Standardwerk Houben-Weyl "Methoden der Organischen Chemie", Band 14/1 (1061), Seite 698, angegeben.

Es ist bekannt, daß einige als Cokatalysatoren vorgeschlagene Verbindungen die Eigenschaft haben, die Ausbildung von Polystyrolblöcken zu unterdrücken. Die gleiche Eigenschaft haben Verbindungen, die als Randomizer bezeichnet werden und meist Kaliumsalze von Alkoholaten sowie organischen Carbon- und Sulfonsäuren sind.

Gemäß einer besonderen Ausführungsform des Verfahrens können die nach Abschluß der Polymerisation vorliegenden "lebenden Polymere" mit einem Kupplungsmittel zu verzweigten oder sternförmigen Blockcopolymerisaten umgesetzt werden.

Geeignete Kupplungsmittel sind Polyepoxide, wie epoxidiertes Leinsamenöl, Polyisocyanate, Polyketone, wie 1,3,6-Hexantrion, Polyanhydride, wie beispielsweise das Dianhydrid der Pyromellithsäure und Dicarbonsäureester, wie Adipinsäuredimethylester. Besonders geeignet sind
- die Tetrahalogenide der Elemente Si, Ge, Sn und Pb, insbesondere SiCl₄.
- Organische Verbindungen der allgemeinen Formel Rₙ[SiHal₃]ₙ, mit n = 1 bis 6, insbesondere n = 1 und 2. Hierbei ist R ein n-wertiger organischer Rest, beispielsweise ein aliphatischer, cycloaliphatischer oder aromatischer Rest mit 6 bis 16 C-Atomen. Beispielhaft seien 1,2,4-Tris(2-trichlorsilylethyl)-cyclohexan, 1,8-Bis(trichlorsilyl)-octan und 1-(Trichlorsilyl)-octan genannt.
- Organische Verbindungen, die mindestens einmal die Gruppierung > SiHal₂ enthalten, wie z. B. Dimethylsilylchlorid.
- Halogensilanwasserstoffe der allgemeinen Formel Si(H)ₘ(Hal)₄₋ₘ mit 3 ≥ m ≥ 1.
- Di- und Trivinylbenzole, wie z. B. 1,4-Divinylbenzol.

Es hat sich als zweckmäßig erwiesen, als Kupplungsmittel Divinylbenzol zu verwenden.

Das Verfahren kann sowohl diskontinuierlich als auch kontinuierlich betrieben werden.

Als Lösemittel wird ein Kohlenwasserstoffgemisch eingesetzt, das zu etwa 50 % aus Hexan besteht. Weitere Bestandteile dieses hydrierten C₆-Schnitts sind insbesondere Pentan, Heptan und Oktan sowie deren Isomere. Das Lösemittel wird über einem Molekularsieb der Porenweite 0,4 nm getrocknet, so daß der Wasseranteil unter 10 ppm gesenkt wird, und anschließend mit N₂ gestrippt.

Die organische Lithiumverbindung ist n-Butyllithium, die, wenn nicht anders angegeben, in Form einer 20gewichtsprozentigen Lösung in Hexan zur Anwendung kommt.

Die Monomeren Isopren und Styrol werden vor ihrem Einsatz 24 Stunden über Calciumhydrid unter Rückfluß gekocht, abdestilliert und mit n-Butyllithium in Gegenwart von o-Phenanthrolin austitriert.

Die Glykolether werden über Calciumhydrid destilliert und anschließend mit n-Butyllithium in Gegenwart von o-Phenanthrolin austitriert.

Das Divinylbenzol (DVB) stellt ein Gemisch des m- und p-Divinylbenzols dar und wird in Form einer 64%igen Lösung in Hexan eingesetzt. Die Bestimmung des Umsatzes erfolgt, indem man den Feststoffgehalt nach Abdampfen des Lösemittels und der Monomeren bestimmt.

Die Bestimmung der Mikrostruktur erfolgt IR-spektroskopisch.

Als Kupplungsausbeute wird der Prozentanteil an Kautschuk angesehen, der nach der Umsetzung mit einem Kupplungsmittel eine sternförmige Struktur aufweist und sich gegenüber dem ungekuppelten Kautschuk durch ein erheblich höheres Molekulargewicht auszeichnet. Die Bestimmung erfolgt mit der GPC-Analyse, wobei Tetrahydrofuran als Lösemittel und Polystyrol als Säulenmaterial eingesetzt wird. Die Polymerisate werden mit einem Lichtstreuungsdetektor charakterisiert. Zu diesem Zweck werden dem Reaktor vor Zugabe des Kupplungsmittels und zu Ende der Reaktion Proben entnommen. Die Defo-Härte (DH) und die Defo-Elastizität (DE) werden nach den üblichen Meßmethoden bestimmt (DIN 53 514).

Die zu verwendenden Öle oder beliebige Kombinationen aus diesen Ölen können folgendermaßen charakterisiert werden (siehe dazu Kautschuk + Gummi Kunststoffe 39. Jahrgang Nr. 9/86, Seite 816):

| | Paraffinisch | Paraffinisch/ naphthenisch | Naphthenisch | Naphthenisch/ aromtisch | Aromatisch | Sehr aromatisch |
|---|---|---|---|---|---|---|
| C_{A} (aromatisch) | < 10 | < 15 | 0 - 30 | 25 - 40 | 35 - 50 | 50 - 60 |
| C_{N} (naphthenisch) | 20 - 30 | 25 - 40 | 30 - 45 | 20 - 45 | 25 - 40 | < 40 |
| C_{P} (paraffinisch) | 55 - 75 | 55 - 65 | 35 - 55 | 25 - 45 | 20 - 35 | < 25 |
| C ≙ Kohlenstoffatom | | | | | | |

Sie können im Bereich von 10 phr bis 50 phr zum Einsatz kommen, d. h. die Ölmenge richtet sich jeweils nach der Einsatzmenge des aktiven, verstärkenden Füllstoffs.

Die erfindungsgemäßen Laufflächen können sowohl aromatisches als auch naphthenisches oder paraffinisches Öl oder einen beliebigen Blend aus den oben angegebenen Spezifikationen enthalten. Bevorzugt wird aromatisches oder naphthenisches Öl eingesetzt. Anstelle eines üblichen aktiven Rußes kann auch ein mineralischer Füllstoff (z. B. Kieselsäure) oder eine Kombination aus beiden eingesetzt werden. Der Ruß oder die Kieselsäure werden von 50 bis 90 phr eingesetzt. Bei Blends aus beiden Komponenten beträgt die Menge der Blends ebenfalls 50 bis 90 phr.

Der Laufflächenkautschuk wird nach der allgemeinen Vulkanisationsmischung (siehe Beispiele) mit 50 phr Ruß und 10 phr aromatischem Öl hergestellt und einer Laborprüfung unterzogen, wobei die Raumtemperaturelastizität bei 22 °C bestimmt wird. Dabei kann es sich um einen Integralkautschuk oder um einen beliebigen Blend aus den angegeben Kautschuken handeln.

Liegt die Raumtemperaturelastizität der Mischung zwischen 5 und 35 %, dann kann durch Herstellung eines Blends mit Naturkautschuk das ABS-Bremsen deutlich verbessert werden.

Die Herstellung der Reifenlaufflächen erfolgt in an sich bekannter Weise durch Vermischen der Kautschukkomponente mit den Zuschlagstoffen. Übliche Zuschlagstoffe sind beispielsweise Ruße, Kieselsäuren, Weichmacher, Beschleuniger, Alterungs- und Ozonschutzmittel und Harze. Das Vermischen erfolgt in üblichen Mischungsaggregaten, z. B. Kneter und Walzwerke. Die dabei einzustellende Temperatur hängt in bekannter Weise von der Zusammensetzung der Compounds und den Mischungsverfahren ab.

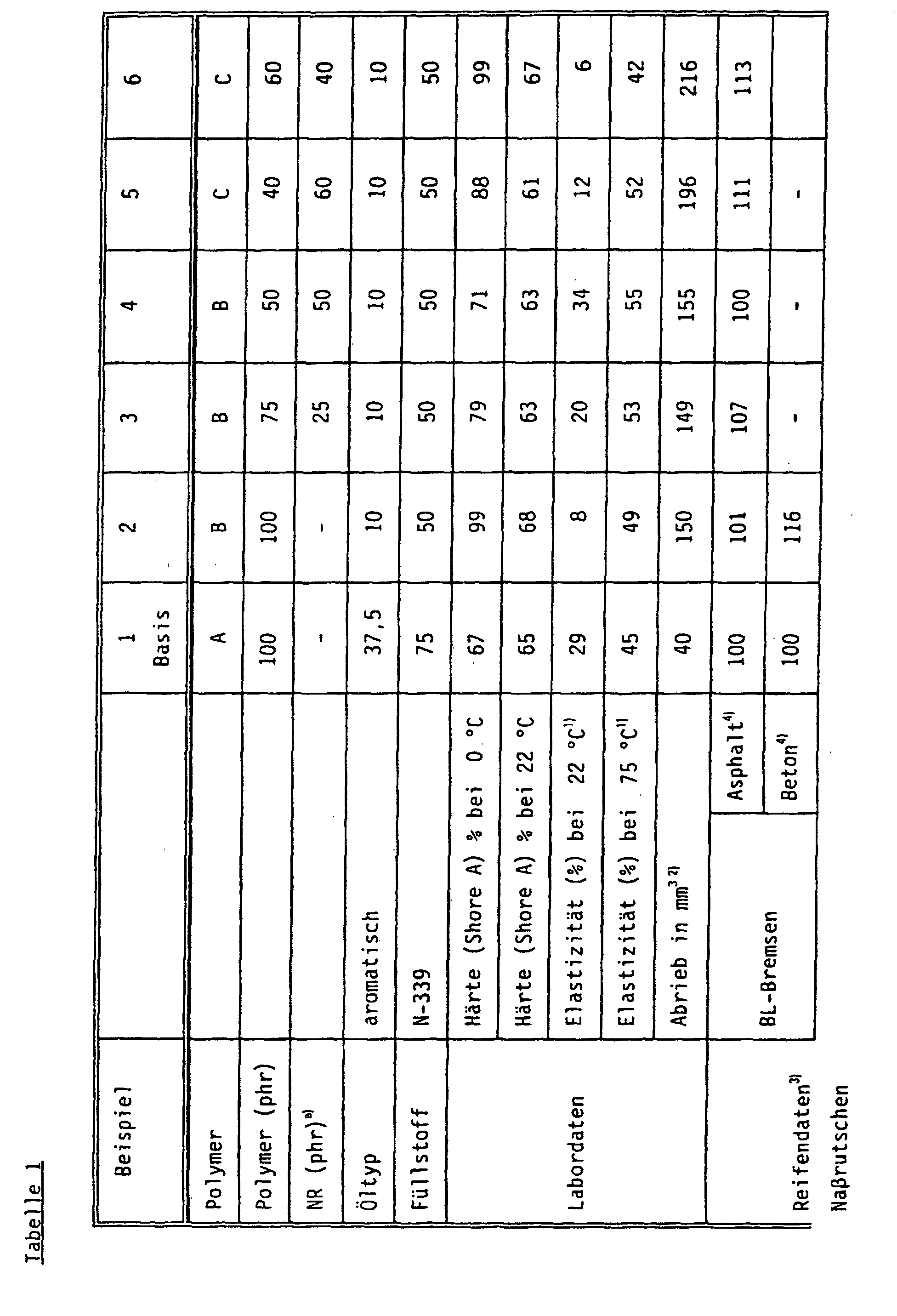

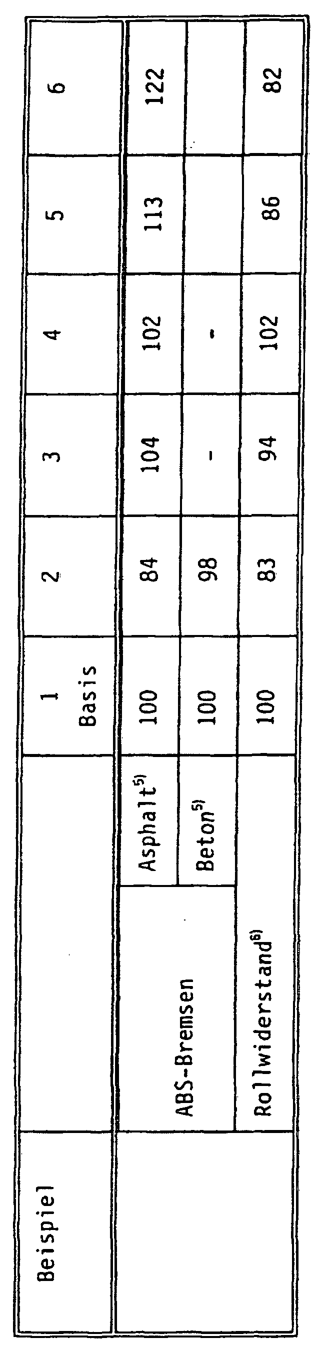

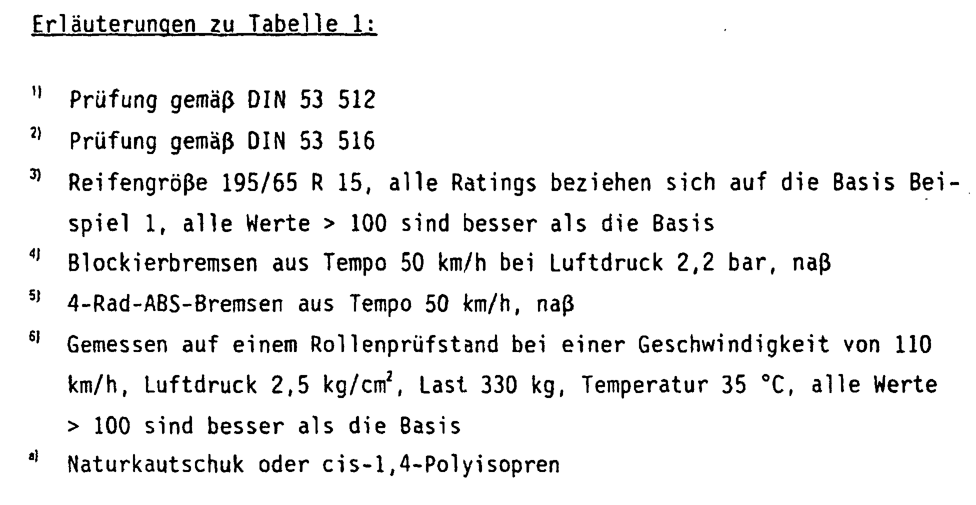

### Polymer A (Basis)

BUNA® HÜLS EM 1712 ist ein üblicher Styrol-Butadien-Kautschuk, mit 37,5 Teilen Öl gestreckt. Abweichend von der später angegebenen, allgemeinen Vulkanisationsmischung wird BUNA® HÜLS EM 1712 in folgender Zusammensetzung vulkanisiert:
137,5 Teile BUNA® HÜLS EM 1712
75 Teile Ruß N 339
3 Teile aromatisches Öl
3 Teile Zinkoxid
2 Teile Stearinsäure
1 Teil VULKANOX® 4010 NA
1 Teil VULKANOX® 4020
1 Teil KORESIN®
1,5 Teile CBS
0,2 Teile DPG
2 Teile Schwefel

### Herstellung AB-Blockpolymer B

In einem mit trockenem Stickstoff gespülten, ersten V2A-Rührautoklaven werden 275 Teile Hexan, 40 Teile 1,3-Butadien und 0,03 Teile DVB vorgelegt und nach Trocknung über einem Molekularsieb (0,4 mm) unter thermoelektrischer Kontrolle mit n-Butyllithium (Buli) titriert. Die Polymerisation wird bei 50 °C durch Zugabe von 0,032 Teilen n-Butyllithium gestartet. Die Temperatur steigt trotz Kühlung kurzzeitig bis auf maximal 62 °C. Nach 107 Minuten, nachdem das vorgelegte 1,3-Butadien praktisch vollständig umgesetzt ist, wird eine IR-Probe entnommen und wie das Endprodukt aufgearbeitet.

Unmittelbar danach wird innerhalb von 100 Sekunden der Inhalt eines zweiten V2A-Rührautoklaven (40 °C) zugegeben. Dieser enthält eine mit n-Butyllithium titrierte Lösung von 15 Teilen 1,3-Butadien, 30 Teilen Isopren und 15 Teilen Styrol in 190 Teilen Hexan.

Unmittelbar danach werden 2,0 Teile Ethylenglykoldimethylether zugegeben. Die Temperatur wird konstant bei 50 °C gehalten. 4 Stunden nach dem Start wird die Polymerisation durch Zugabe einer Lösung von 0,5 Teilen 2,2-Methylen-(4-methyl-6-tertiär-butylphenol) in 2 Teilen feuchtem Toluol gestoppt. Das Lösemittel wird mit Wasserdampf abdestilliert und das Polymerisat 24 Stunden bei 70 °C im Umluftschrank getrocknet.

### Mikrostruktur:

| | | |
|---|---|---|
| Butadien | 1,4-trans | 23 |
| | 1,2 | 17 |
| | 1,4-cis | 17 |
| Isopren | 3,4 | 24 |
| | 1,4 | 3 |
| Styrol | | 16 |

### Herstellung Terpolymer C

In einem mit trockenem Stickstoff gespülten V2A-Autoklaven werden 400 Teile Hexan, ein Monomeren-Gemisch aus 25 Teilen 1,3-Butadien, 50 Teilen Isopren, 25 Teilen Styrol, 0,02 Teilen DVB und 1,0 Teilen Ethylglykoltertiär-butylether vorgelegt und nach Trocknung über Molekularsieb (0,4 mm) unter thermoelektrischer Kontrolle mit Butyllithium titriert. Die Polymerisation wird bei 40 °C durch Zugabe von 0,054 Teilen n-Butyllithium gestartet. Die Temperatur erreicht bei leichter Kühlung nach 8 Minuten 108 °C. Bei dieser Temperatur kann der Ansatz 30 Minuten lang nachreagieren. Nach Abkühlung auf 50 °C wird die Polymerisation durch Zugabe einer Lösung von 0,5 Teilen 2,2'-Methylen-bis-(4-methyl-6-tertiärbutylphenol) in 2 Teilen feuchtem Toluol gestoppt. Das Lösemittel wird mit Wasserdampf abdestilliert und das Polymerisat 24 Stunden bei 70 °C im Umlufttrockenschrank getrocknet.

### Mikrostruktur:

| | | |
|---|---|---|
| Butadien | 1,4-trans | 4 |
| | 1,2 | 19 |
| | 1,4-cis | 7 |
| Isopren | 3,4 | 40 |
| | 1,4 | 4 |
| Styrol | | 26 |

### Allgemeine Vulkanisationsrezeptur

Aus den erfindungsgemäßen Laufflächenkautschuken werden Vulkanisationsmischungen folgender Zusammensetzung hergestellt (siehe Tabelle 1) :

| | |
|---|---|
| 100 | Teile Laufflächenkautschuk |
| 50 | Teile Ruß N 339 |
| 10 | Teile aromatisches Öl oder naphthenisches Öl |
| 3 | Teile Zinkoxid |
| 1 | Teil Stearinsäure |

| | |
|---|---|
| 1 Teil | N-Isopropyl-N'-phenyl-p-phenylendiamin (VULKANOX® 4010 NA) |
| 1 Teil | N-(1,3-Dimethylbutyl)-N'-phenylendiamin VULKANOX® 4020 |
| 1 Teil | KORESIN®, Umsetzungsprodukt von p-tert.-Butylphenol mit Acetylen |
| 1,3 Teile | N-Cyclohexyl-1-benzothiazolsulfenamid (CBS, VULKACIT® CZ) |
| 0,3 Teile | Diphenylguanidin (DPG, VULKACIT® DZ) |
| 1,6 Teile | Schwefel |

Die Produkte VULKANOX® 4010 NA, VULKANOX® 4020, VULKACIT® CZ und VULKACIT® DZ sind bei der Bayer AG, Leverkusen, und KORESIN® bei der BASF AG, Ludwigshafen, erhältlich.

## Patentansprüche

1. Reifenlaufflächen auf Basis von Copolymerisaten aus Butadien und Isopren und/oder Styrol, die eine Raumtemperaturelastizität zwischen 5 und 35 % (bei 22 °C) aufweisen, sowie üblichen Zuschlagstoffen,
wobei die Copolymerisate
AB-Blockpolymerisate aus
| | |
|---|---|
| 40 bis 80 % | eines Blockes A auf Basis von Butadien (gleichmäßig verteilter Vinylgruppengehalt von 8 bis 60 %), |
| 60 bis 20 % | eines Blockes B auf Basis von |
| | - bis zu 60 % Butadien, |
| | - 0 bis 60 % Isopren und |
| | - 0 bis 45 % Styrol, |
wobei der Vinylgehalt der Dieneinheiten 75 bis 90 % beträgt,
oder ABC-Blockpolymerisate aus
| | |
|---|---|
| 40 bis 75 % | eines Blocks A aus Butadien- und Styrol- und/oder Isopreneinheiten mit einem Vinyl bzw. Isopropylengruppengehalt (V) von weniger als 15 %, |
| 5 bis 25 % | eines Blocks B aus Butadien- und Styrol- und/oder Isopreneinheiten (V > 70 %) oder |
| 5 bis 25 % | eines Blocks B' aus Styrol-, Isopren- und gegebenenfalls Butadieneinheiten (V < 15 %) und |
| 20 bis 55 % | eines Blocks C aus Styrol-, Isopren- und gegebenenfalls Butadieneinheiten (V >70 %) |
sind, die mit Naturkautschuk im Verhältnis 90 : 10 bis 40 : 60 verblendet sind, und der Laufflächenkautschuk 10 bis 50 phr aromatisches und/oder naphthenisches und/oder paraffinisches Öl sowie Ruß und/oder einen mineralischen Füllstoff enthält.

2. Reifenlaufflächen gemäß Anspruch 1, **dadurch gekennzeichnet, dass** der Laufflächenkautschuk aromatisches Öl enthält.

3. Reifenlaufflächen gemäß Anspruch 1, **dadurch gekennzeichnet, dass** der Laufflächenkautschuk naphthenisches Öl enthält.

4. Reifenlaufflächen gemäß zumindest einem der Ansprüche 1 bis 3, **dadurch gekennzeichnet, dass** das AB-Blockpolymerisat
| | |
|---|---|
| 50 bis 75 % | 1,3- Butadien, |
| 5 bis 35 % | Isopren und |
| 5 bis 25 % | Styrol enthält. |

5. Reifenlaufflächen gemäß zumindest einem der Ansprüche 1 bis 4, **dadurch gekennzeichnet, dass** der Laufflächenkautschuk 50 bis 90 phr Ruß und/oder Kieselsäure enthält.

## Claims

1. Tyre treads based on copolymers of butadiene and isoprene and/or styrene, which have a roomtemperature elasticity of between 5 and 35 % (at 22°C), as well as conventional additives, wherein the copolymers are AB block polymers comprising:
| | |
|---|---|
| 40 to 80% | of a block A based on butadiene (uniformly distributed vinyl group content of 8 to 60 %), |
| 60 to 20 % | of a block B based on |
| | - up to 60 % butadiene, |
| | - 0 to 60 % isoprene and |
| | - 0 to 45 % styrene, |
the vinyl content of the diene units being 75 to 90 %,
or are ABC block polymers comprising:
| | |
|---|---|
| 40 to 75 % | of a block A comprising butadiene and styrene and/or isoprene units having a vinyl or isopropylene group content (V) of less than 15 %, |
| 5 to 25 % | of a block B comprising butadiene and styrene and/or isoprene units (V > 70 %), or |
| 5 to 25 % | of a block B' comprising styrene, isoprene and possibly butadiene units (V < 15 %), and |
| 20 to 55 % | of a block C comprising styrene, isoprene and possibly butadiene units (V > 70 %) |
which are blended with natural rubber in a ratio of between 90:10 and 40:60, and the tread rubber contains 10 to 50 phr aromatic and/or naphthenic and/or paraffinic oil as well as carbon black and/or a mineral filler.

2. Tyre treads according to claim 1, **characterised in that** the tread rubber contains aromatic oil.

3. Tyre treads according to claim 1, **characterised in that** the tread rubber contains naphthenic oil.

4. Tyre treads according to at least one of claims 1 to 3, **characterised in that** the AB block polymer contains:
| | |
|---|---|
| 50 to 75 % | 1,3-butadiene, |
| 5 to 35 % | isoprene and |
| 5 to 25 % | styrene. |

5. Tyre treads according to at least one of claims 1 to 4, **characterised in that** the tread rubber contains 50 to 90 phr carbon black and/or silica.

## Revendications

1. Bandes de roulement de pneumatiques à base de produits de copolymérisation de butadiène et d'isoprène et/ou de styrène qui présentent, à température ambiante, une élasticité comprise entre 5 % et 35 % (à 22°C), ainsi qu'à base d'additifs habituels,
où les produits de copolymérisation sont des produits de polymérisation en blocs AB constitués de :
| | |
|---|---|
| de 40 % à 80 % | d'un bloc A à base de butadiène (teneur du groupe vinyle comprise entre 8 % et 60 %, répartie uniformément), |
| de 60 % à 20 % | d'un bloc B à base : |
| | - de butadiène : jusqu'à 60 % |
| | - d'isoprène : de 0 % à 60 % et |
| | - de styrène : de 0 % à 45 %, |
où la teneur en vinyle des unités diènes est comprise entre 75 % et 90 %,
ou des produits de polymérisation en blocs ABC constitués de :
| | |
|---|---|
| de 40 % à 75 % | d'un bloc A d'unités de butadiène et de styrène et/ou d'isoprène ayant une teneur (V) en vinyle et/ou de groupe isopropyle inférieure à 15 %, |
| de 5 % à 25 % | d'un bloc B d'unités de butadiène et de styrène et/ou d'isoprène (V > 70 %) ou |
| de 5 % à 25 % | d'un bloc B' d'unités de styrène, d'isoprène et, le cas échéant, de butadiène (V < 15 %), et |
| de 20 % à 55 % | d'un bloc C d'unités de styrène, d'isoprène et, le cas échéant, de butadiène (V > 70 %), |
qui sont mélangés avec du caoutchouc naturel suivant un rapport compris entre 90 : 10 et 40 : 60, et le caoutchouc des bandes de roulement contient entre 10 phr et 50 phr d'huile aromatique et/ou naphténique et/ou paraffinique ainsi que du noir de carbone et/ou une charge minérale.

2. Bandes de roulement de pneumatiques selon la revendication 1, **caractérisées en ce que** le caoutchouc des bandes de roulement contient de l'huile aromatique.

3. Bandes de roulement de pneumatiques selon la revendication 1, **caractérisées en ce que** le caoutchouc des bandes de roulement contient de l'huile naphténique.

4. Bandes de roulement de pneumatiques selon au moins l'une quelconque des revendications 1 à 3, **caractérisées en ce que** le produit de polymérisation en blocs AB contient :
- de 50 % à 75 % de 1,3-butadiène
- de 5 % à 35 % d'isoprène et
- de 5 % à 25 % de styrène.

5. Bandes de roulement de pneumatiques selon au moins l'une quelconque des revendications 1 à 4, **caractérisées en ce que** le caoutchouc des bandes de roulement contient entre 50 phr et 90 phr de noir de carbone et/ou d'acide silique.
